# FASCICULE DE BREVET EUROPEEN

(11) **EP 2 057 892 B1**
(45) Date de publication et mention de la délivrance du brevet: **14.08.2019**
(21) Numéro de dépôt: 08305770.3
(22) Date de dépôt: 04.11.2008
(51) Int. Cl.: A01G 3/04

(54) **Lamier à bati curviligne**
Mähwerk mit gekrümmtem Rahmen
Trimmer with curved frame

(30) Priorité: 06.11.2007 FR 0758803
(43) Date de publication de la demande: 13.05.2009
(73) Titulaire: Coup'Eco, 17800 Pons (FR)
(72) Inventeur: Boulard, Thierry, 17250 Sainte Gemme (FR)
(74) Mandataire: Aquinov

(56) Documents cités:
- EP-A1- 1 060 650
- DE-C1- 4 113 567
- FR-A- 2 110 694
- US-A- 3 487 615
- US-A- 4 067 178
- US-A- 4 302 922

## Description

La présente invention concerne un lamier pour l'élagage de la végétation, à caisson curviligne.

On connaît les lamiers qui sont utilisés pour la coupe de végétaux notamment pour la taille des haies, l'élagage des arbres de bord de route ou la taille arboricole.

Ces lamiers utilisent des moyens de coupe sous forme de disques de scie ou de disques équipés de couteaux suivant les besoins.

Les disques de scie sont munis de dents sur la périphérie.

Les disques équipés de couteaux portent au moins deux couteaux montés pivotant chacun autour d'un axe, les axes étant disposés sur la partie périphérique du disque. En fonctionnement, sous l'effet de la force centrifuge, les couteaux s'orientent suivant une direction radiale. Chaque couteau dispose d'une géométrie particulière en fonction des besoins de coupe.

On appellera pour la suite de la description, disque de coupe, indifféremment les disques de scie à dents périphériques et les disques équipés de couteaux.

Les lamiers sont rapportés sur des moyens de manoeuvre tels que des bras articulés et/ou télescopiques, équipés de vérins hydrauliques. Ces moyens de manoeuvre sont généralement associés à un véhicule du type tracteur, ou engin polyvalent ou encore pelle mécanique.

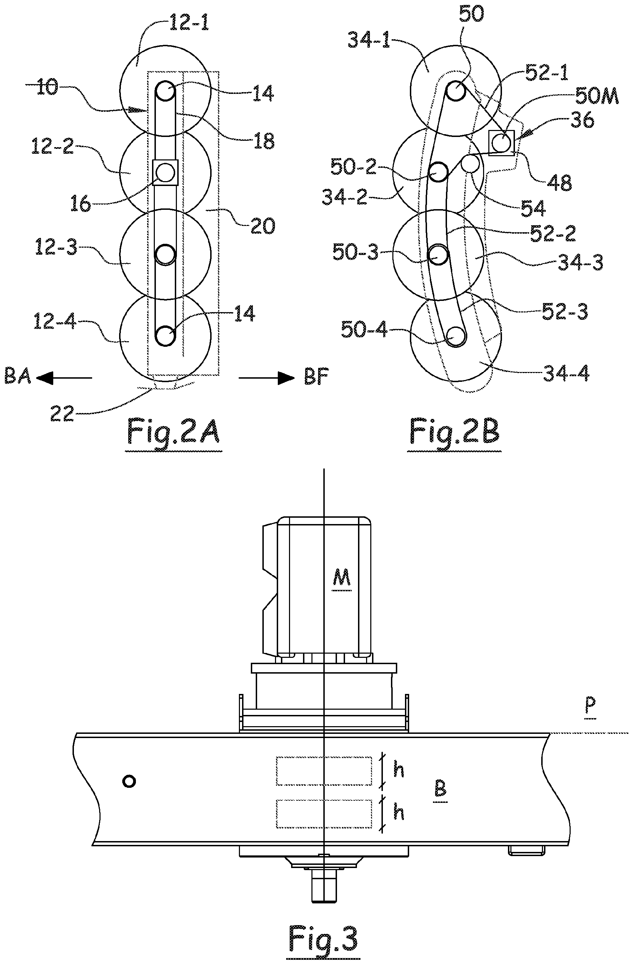

Actuellement, comme montré sur la figure 2A qui représente schématiquement un lamier de l'art antérieur, les lamiers existants comprennent un caisson 10 rectiligne avec au moins deux disques 12, en l'occurrence quatre disques, montés rotatif, chacun sur un palier 14 solidaire dudit caisson.

Ces disques sont entraînés par un moteur 16, du type moteur hydraulique, de façon connue également, au moyen d'ensembles 18 poulies/courroies, l'une au moins des poulies étant solidaire de l'arbre moteur du moteur hydraulique.

Les disques 12 sont à recouvrement et se trouvent donc décalés en hauteur nécessairement, le long du caisson, alternativement. Dans l'exemple représenté sur la figure 2A, les disques 12-1 et 12-3 sont à proximité du caisson et les disques 12-2 et 12-4 sont écartés de ce caisson.

Le lamier présente un bord d'attaque BA qui correspond au sens d'avance du lamier dans la végétation et donc au sens de travail et un bord de fuite BF, situé en arrière du caisson par rapport au sens d'avancement.

Un carter 20 arrière de sécurité est rapporté sur la caisson 10 afin d'assurer le guidage des projections des coupes issues des disques d'une part et d'éviter le passage de végétation dans les disques sur l'arrière, ce qui pourrait provoquer des coupes sauvages non maîtrisées avec des projections potentiellement dangereuses.

Des lamiers avec un bord d'attaque concave sont aussi connus de US 4 067 178 et US 3 487 615.

Si de tels lamiers donnent satisfaction, ils ne permettent pas de répondre pleinement à l'ensemble des problèmes posés par les utilisateurs tant du point de vue de la qualité de travail que des possibilités d'intervention ou encore de la sécurité.

Dans le cas des élagages et encore plus lorsqu'il s'agit de lamiers pour du travail lourd, il se produit des bourrages du fait notamment d'une évacuation insuffisante des débris de coupe.

Lorsque l'évacuation des débris est de piètre qualité, la qualité de coupe elle-même s'en ressent et le travail de façon générale reste critiquable.

Ceci est d'autant plus vrai que la végétation est dense car le lamier pénètre mal dans cette végétation, notamment du fait de sa géométrie rectiligne. Le lamier a tendance à pousser la végétation par son caisson et la progression des disques ainsi que leur efficacité de travail sont perturbées.

On sait aussi que pour un diamètre de disque donné, il est nécessaire de dégager au mieux le bord d'attaque des disques et la surface de coupe, or le caisson dans le cas de lamiers rectilignes occulte une partie de la surface de travail de chaque disque.

Le moteur lui-même, placé au-dessus est d'une part très exposé et d'autre part sujet à l'entraînement de végétaux. Cet élément en saillie limite aussi la bonne pénétration et l'évacuation des déchets de coupe.

Les utilisateurs sont souvent amenés à faire pénétrer le lamier dans la végétation pour tailler une branche par exemple en orientant de façon adéquate ledit lamier.

L'intérêt serait de disposer d'un disque d'extrémité 12-1 le plus dégagé possible puisque seul ce disque est sollicité lors de telles actions de pointe, or, dans les lamiers existants, le disque d'extrémité est partiellement encombré par le caisson. De telles actions de pointe sont donc souvent mal aisées ou conduites en force avec dégradation de la végétation environnante et du matériel, ce qui est insatisfaisant.

Dans les lamiers de l'art antérieur, le caisson porte un carter arrière de protection qui est rapporté, en une pièce et amovible. On constate que certains utilisateurs, au mépris des règles de sécurité, retirent ce carter, pour faciliter les manoeuvres et les pénétrations dans la végétation d'une part et éventuellement pour travailler en taille dans le sens opposé, en marche arrière d'autre part.

En plus des risques de projections dangereuses, il est possible de dégrader le matériel lui-même notamment les flexibles de fluide hydraulique d'alimentation du lamier.

Il est à noter aussi que pour améliorer l'évacuation des déchets de coupe, il convient de supprimer tout élément en saillie notamment des organes de fixation en saillie comme les boulons en dessous du caisson qui sont autant de sources d'accroche.

Les lamiers sont dotés à l'extrémité inférieure, éventuellement destinée à venir au contact avec le sol, sous le disque 12-4 dans le cas de la figure 2A, d'un sabot 22.

Ce sabot 22 est également amovible et le lamier fonctionne même en retirant ce sabot. De fait certains utilisateurs n'hésitent pas à retirer ce sabot qui est une source d'accroche dans la végétation. De fait, ce retrait engendre des risques substantiels de projections et de dégradation du disque concerné lors des contacts au sol. Cette amovibilité reste insatisfaisante.

Les lamiers de l'art antérieur restent aussi quelque peu dangereux même hors service. En effet, lors des déplacements du porteur du bras pour se rendre sur le lieu d'intervention, les disques du lamier restent des organes potentiellement dangereux. Il est donc prévu une protection des disques sous forme d'un cache linéaire qui vient coiffer une partie périphérique des bords des disques, ledit cache étant maintenu en place par des éléments élastiques de rappel.

Ce cache est du type rigide et il apparaît que les utilisateurs doivent le placer dans l'habitacle du véhicule porteur du bras durant la phase de travail si bien que compte tenu de l'encombrement, ce cache et très souvent retiré la première fois et rarement repositionné.

Le lamier selon la présente invention vise à répondre à l'ensemble des problématiques exposées, et propose un lamier selon les caractéristiques de la revendication 1.

Afin de présenter l'ensemble des caractéristiques du lamier selon la présente invention, il est prévu la description qui va suivre, cette description étant établie en regard des dessins annexés qui représentent un mode de réalisation particulier, non limitatif, les figures correspondant à :
- figure 1 : une vue en perspective d'un lamier selon la présente invention,
- figure 2A : une vue schématique d'un lamier selon l'art antérieur,
- figure 2B : une vue schématique de l'agencement du lamier selon la présente invention comparé au lamier de l'art antérieur,
- figure 3 : une vue en élévation latérale d'un agencement d'une motorisation sur le lamier de l'art antérieur,
- figure 4 : une vue d'un agencement de dessus d'une motorisation sur le lamier selon la présente invention,
- figure 5 : une vue en coupe de la motorisation de la figure 4,

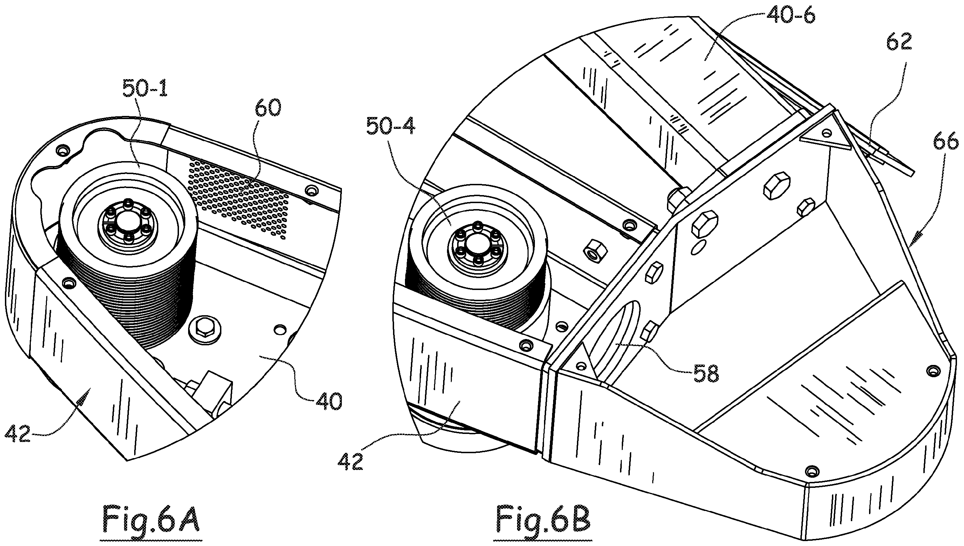

- figure 6A :une vue en perspective de l'extrémité supérieure du lamier selon la présente invention,
- figure 6B : une vue en perspective de l'extrémité inférieure du lamier selon la présente invention,
- figure 7 : une vue en perspective d'une partie d'un carter souple de protection pour disque d'un lamier selon la présente invention.

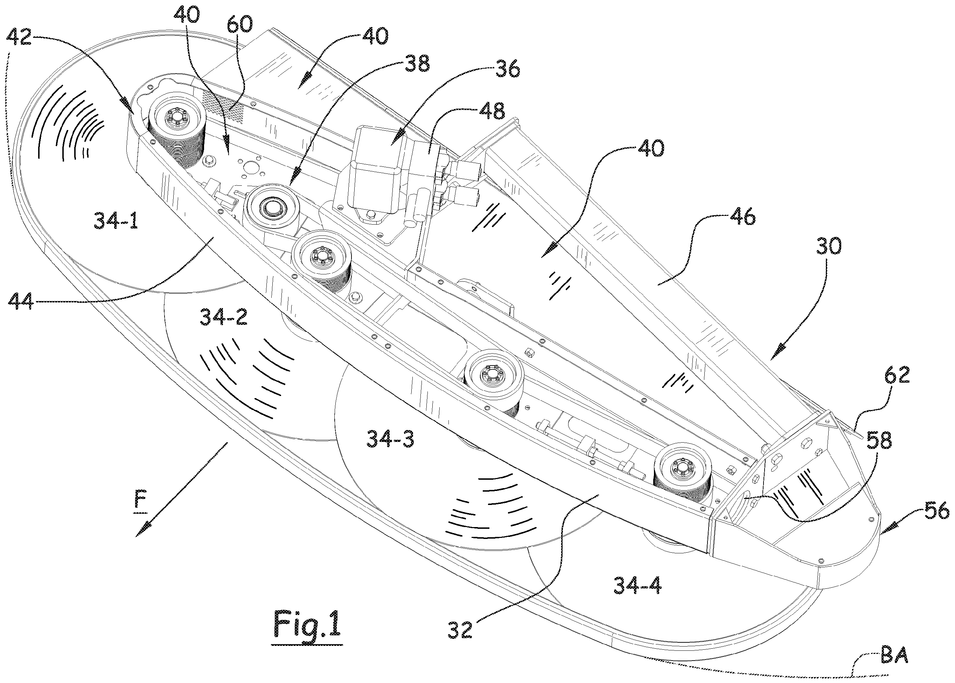

Sur la figure 1, on peut appréhender l'agencement général du lamier selon l'invention en corrélation avec la vue schématique simplifiée de la figure 2B.

Le lamier 30 comprend un caisson 32 curviligne, le centre virtuel étant sur l'arrière de façon à présenter dans le sens d'avancement et de travail symbolisé par la flèche F, un bord d'attaque BA convexe.

Ce caisson porte des disques 34 de coupe, en l'occurrence quatre disques 34-1 à 34-4. Ces disques 34 ont des arbres de rotation disposés également suivant une ligne courbe. Les disques sont agencés avec une superposition de coupe et un décalage alternatif en hauteur.

Dans le cas présent, le premier disque dit supérieur 34-1 est proche du caisson. Le deuxième disque 34-2 est écarté du caisson, le troisième disque 34-3 est proche du caisson et le dernier disque 34-4 est écarté dudit caisson.

Sur ce caisson, il est également prévu une motorisation 36 ainsi que des moyens 38 d'entraînement en rotation des disques.

Le caisson 32 comprend donc un bâti 40 monolithique sous forme d'une plaque de fond rigide qui supporte tous les effort, plaque sur laquelle sont rapportés tous les éléments du lamier.

Sur cette plaque, il est disposé un carter 42 principal avec sa face avant 44 curviligne, positionné immédiatement en amont des arbres de rotation des disques 34 par rapport au sens d'avancement et de travail F. Ce carter 42 principal reçoit des capots de couverture pour le fermer, pour protéger le mécanisme intérieur et pour le rigidifier, ces capots étant non représentés de façon à rendre visible l'intérieur dudit carter.

On note ainsi que les disques sont dégagés sensiblement sur la moitié de leur surface avant.

Ce carter 42 principal contourne au plus près l'arbre de rotation du premier disque 34-1 et dégage ce disque sensiblement sur les trois quarts de sa surface. En partie arrière, le bâti 40 inclut une poutre 46 de fixation prévue pour être rapportée sur un bras de manoeuvre, non représenté, ceci de façon connue.

La motorisation 36 comprend de façon avantageuse un moteur 48 hydraulique. La motorisation est positionnée en arrière des arbres des disques 34.

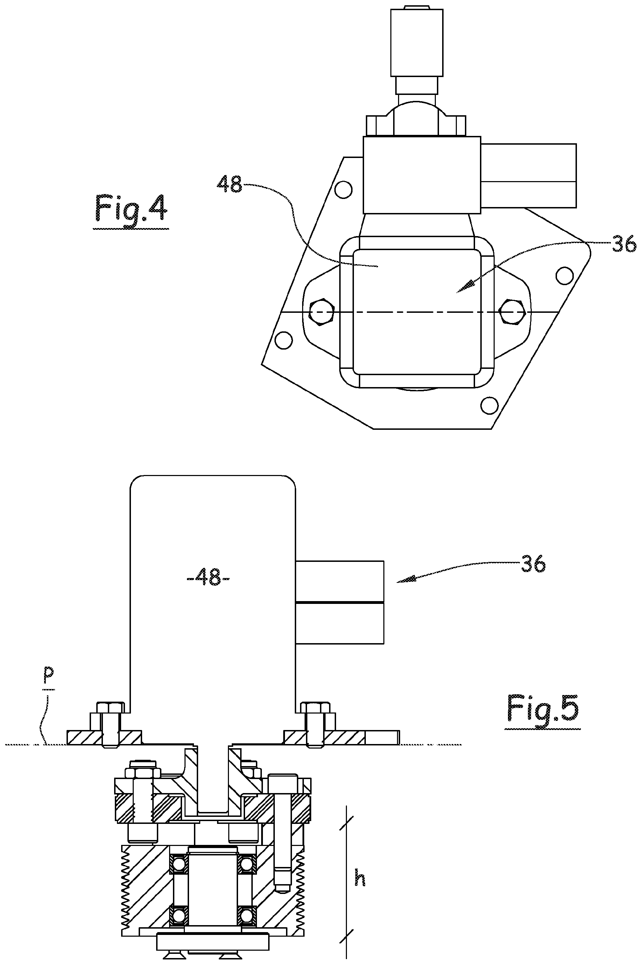

Cette motorisation est représentée en détail sur les figures 4 et 5.

L'art antérieur, figure 3, montre la motorisation M placée au-dessus du plan P du caisson B du lamier, en saillie totale, car l'arbre moteur entraîne directement un arbre de disque et comprend une poulie sur deux hauteurs h de courroies pour assurer les renvois vers les autres arbres de disques.

Dans le cas du lamier selon l'invention, le moteur 48 est rapporté avec un plan P plus bas car le moteur 48 n'entraîne pas directement un arbre de disque de coupe mais une poulie pour entraîner uniquement une hauteur de courroie.

Ainsi, la motorisation est disposée en arrière et moins en saillie.

Les moyens 38 d'entraînement comprennent une poulie menante 50M et des poulies menées 50-1 à 50-4, chacune liée à chaque arbre de disque correspondant.

Des courroies 52-1 à 52-3 assurent la transmission entre la motorisation et les arbres des disques.

Dans l'agencement de la présente invention, il est aussi prévu un galet tendeur 54.

Ainsi la transmission comprend une courroie 52-1 qui coopère avec la poulie menante 50M et les poulies 50-1 et 50-2, le galet tendeur 54 assurant la tension de cette courroie.

Les disques 34-1 et 34-2 sont entraînés.

La poulie de l'arbre du disque 34-2 reçoit la deuxième courroie 52-2 qui entraîne la poulie 50-3 solidaire de l'arbre du disque 34-3.

Le disque 34-3 est entraîné.

L'arbre du disque 34-4 comporte une poulie 50-4 qui reçoit la troisième courroie 52-3 qui coopère avec la poulie 50-3 de l'arbre du disque 34-3.

Le disque 34-4 est entraîné.

On note que la présence d'un galet tendeur évite la présence d'une platine de réglage de la tension des courroies pour la première poulie au moins et permet le positionnement du carter 42 principal au plus près de l'arbre du disque 34-1.

Le bâti 40 reçoit en partie inférieure un sabot 56 dont les dimensions sont telles qu'il fait saillie au-delà de la zone de travail du disque inférieur 34-4 dans le mode de réalisation représenté.

Ce sabot 56 est rapporté simultanément sur la plaque du bâti 40 et sur la poutre 46 du même bâti 40. Le sabot doit donc être nécessairement en place pour que le bâti 40 puisse être rapporté sur un bras de manoeuvre.

Outre cette fonction de protection du disque inférieur notamment, dédiée au sabot de façon connue, le sabot 56 du lamier selon la présente invention présente d'autres fonctionnalités.

En effet, le sabot est creux et porte une ouverture 58 de circulation d'air destinée à communiquer avec l'intérieur du carter 42 principal.

Ce carter principal comprend également une grille 60 d'entrée d'air, positionnée en partie haute du carter 42 principal, en arrière et au droit de l'arbre du disque 34-1, pour permettre une circulation d'air au sein du carter 42 principal, sur toute sa longueur.

Le sabot assure ainsi la collecte des particules circulantes et le sabot dispose de son propre capotage amovible pour en assurer le nettoyage.

Ainsi, non seulement le sabot est intégré mais on constate qu'il présente un profil arrondi, dans la continuité de la forme curviligne du caisson, ce qui, en éliminant les parties en saillie, favorise l'évacuation des déchets de coupe, la qualité du travail et n'incite pas l'utilisateur à procéder à son retrait, qui est par ailleurs impossible sous peine de rendre non opérationnel le lamier dans son ensemble.

Sur le plan de la sécurité, le lamier selon la présente invention comprend une bavette 62 arrière, directement rapportée sur le bâti 40.

Cette bavette est complémentaire à la plaque de fond du bâti qui assure déjà une protection et un guidage des projections et qui ne peut être retirée.

La bavette 62 est avantageusement réalisée en plusieurs secteurs de sorte à permettre un remplacement partiel en cas de dégradation, cette dégradation étant inévitable du fait des conditions de travail difficiles.

On note donc que même si la bavette est retirée dans son intégralité, le bâti assure une protection efficace et un guidage des projections de coupe, interdisant également le passage de végétaux par l'arrière et les éventuels bourrages associés.

En combinaison avec cet agencement, le caisson étant curviligne, la protection des disques devient plus délicate car il faut une protection 64 également curviligne.

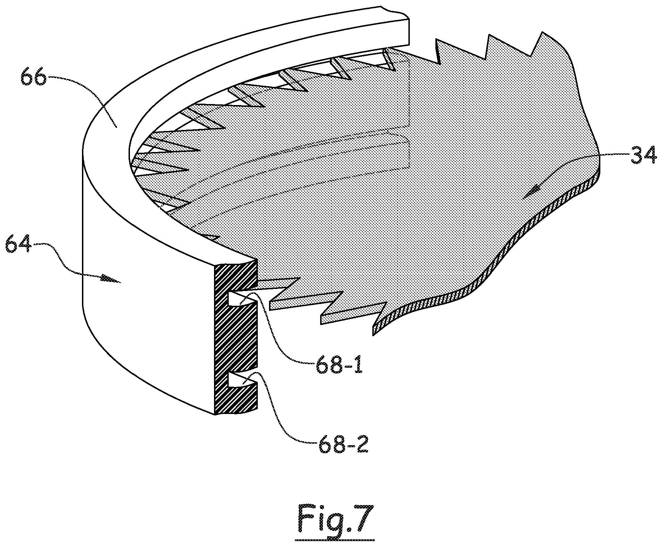

De façon également à répondre au besoin de rangement par l'utilisateur de cette protection durant les phases opérationnelles au sein de son véhicule, la présente invention propose une protection représentée sur la figure 7. Cette protection 64 comprend un ruban 66 épais en matériau élastomére. Ce ruban est muni de deux fentes 68-1 et 68-2 de façon à recevoir les bords des disques disposés dans les deux plans. La largeur des fentes est adaptée à l'avoyage des dents.

Ce ruban en matériau élastomère peut être remisé de façon relativement aisée comparé à un carter rigide.

Le ruban peut être venu de moulage et la forme en E peut lui être conférée en fabrication.

La dureté est adaptée aux besoins pour éviter la destruction en cas de choc et la pénétration des dents à travers l'épaisseur du ruban.

Le lamier selon la présente invention répond particulièrement aux besoins exprimés en préambule.

La forme curviligne permet lors du travail en avançant suivant la flèche F de pénétrer dans la végétation en limitant les efforts car les branches ont une tendance naturelle à s'effacer vers le bas du caisson lors de l'avance du lamier, comme devant une proue de navire.

Le moteur, positionné en arrière et moins proéminant, ne vient pas directement au contact de la végétation car celle-ci est coupée préalablement. Le moteur est protégé et les accessoires du moteur le sont également comme les connections flexibles ou les limiteurs de pression généralement associés à un moteur hydraulique.

Le dégagement important des disques sur l'avant permet une meilleure qualité de coupe et limite aussi les risques de bourrage.

De plus, les branches en s'effaçant le long du lamier passent devant les disques de coupe en mouvement si bien que la qualité de coupe et l'efficacité de travail sont améliorées.

Le dégagement du disque supérieur 34-1 est particulièrement efficace pour les coupes ponctuelles en pénétration.

La sécurité est optimisée en interdisant le démontage du bâti qui fait partie intégrante du caisson et le démontage intempestif du sabot sous peine de non fonctionnement du lamier.

Afin de perfectionner encore le lamier selon l'invention, il est possible d'adjoindre une plaque anti-intrusion en partie frontale, liée au bâti 40, au droit du carter 42 principal.

Une telle plaque est crénelée pour suivre le profil des disques au plus près, ne laissant que le jeu nécessaire au flottement des disques en fonctionnement.

Cet agencement complémentaire permet de limiter la pénétration de morceaux de végétal qui viendraient s'immobiliser entre le bâti et au moins un disque, provoquant un échauffement et/ou une déformation en rotation néfaste au bon fonctionnement du lamier.

On constate aussi que l'architecture ainsi proposée par la présente invention autorise le montage de disques à scie ou à couteaux ou mixte sans aucune difficulté.

## Revendications

1. Lamier (30) pour l'élagage de végétaux, tel que des arbres ou haies, comprenant un caisson (32) apte à recevoir des disques (34) de coupe, une motorisation (36) ainsi que des moyens (38) d'entraînement en rotation desdits disques (34) de coupe, **caractérisé en ce que** le caisson (32) est curviligne, le centre étant sur l'arrière dudit caisson de façon à présenter dans le sens d'avancement et de travail F, un bord d'attaque BA convexe.

2. Lamier (30) selon la revendication 1, **caractérisé en ce que** le caisson (32) porte des disques (34) de coupe dont les arbres de rotation sont disposés suivant une ligne courbe.

3. Lamier (30) selon la revendication 1 ou 2, **caractérisé en ce que** les disques (34) sont agencés avec une superposition de coupe et un décalage alternatif en hauteur.

4. Lamier (30) selon l'une quelconque des revendications précédentes, **caractérisé en ce que** la motorisation (36) est positionnée en arrière des arbres des disques (34).

5. Lamier (30) selon l'une quelconque des revendications précédentes, **caractérisé en ce que** le caisson (32) comprend un bâti (40) monolithique sous forme d'une plaque de fond rigide sur laquelle est rapportée un carter (42) principal avec sa face avant (44) curviligne, positionné immédiatement en amont des arbres de rotation des disques (34) par rapport au sens d'avancement et de travail F.

6. Lamier (30) selon la revendication 5, **caractérisé en ce que** le bâti (40) comprend une poutre (46) de fixation sur sa partie arrière.

7. Lamier (30) selon l'une quelconque des revendications précédentes, **caractérisé en ce que** les moyens (38) d'entraînement comprennent une poulie menante (50M) et des poulies menées (50-1 à 50-4), chacune liée à chaque arbre de disque (34) de coupe correspondant ainsi que des courroies (52-1 à 52-3) assurant la transmission entre ladite motorisation (36) et les arbres des disques (34) ainsi qu'un galet tendeur (54).

8. Lamier (30) selon l'une quelconque des revendications 5 ou 6, **caractérisé en ce que** le bâti (40) reçoit en partie inférieure un sabot (56) faisant saillie au-delà de la zone de travail du disque inférieur (34-4), dans le prolongement curviligne du caisson.

9. Lamier (30) selon la revendication 8, **caractérisé en ce que** le sabot (56) est lié à la plaque de fond du bâti (40) et à la poutre (46).

10. Lamier (30) selon l'une quelconque des revendications 5, 6, 8 ou 9, **caractérisé en ce que** le bâti (40) comprend une bavette (62) arrière.

11. Lamier (30) selon la revendication 10, **caractérisé en ce que** la bavette (62) est multisecteurs.

## Patentansprüche

1. Schneidewerk (30) zur Pflege von Gewächsen, wie Bäumen oder Hecken, mit einem Gehäuse (32), das dazu geeignet ist Schneidscheiben (34), eine Motorisierung (36) sowie Antriebsmittel (38) zum Drehen der Schneidscheiben (34) aufzunehmen, **dadurch gekennzeichnet, dass** das Gehäuse (32) gekrümmt ausgebildet ist, wobei sich das Zentrum im hinteren Bereich des Gehäuses befindet, um auf diese Weise in Vorwärts- und Arbeitsrichtung F eine konvexe Schneidekante BA aufzuweisen.

2. Schneidewerk (30) nach Anspruch 1, **dadurch gekennzeichnet, dass** das Gehäuse (32) Schneidscheiben (34) trägt, deren Drehwellen entlang einer gekrümmten Linie angeordnet sind.

3. Schneidewerk (30) nach Anspruch 1 oder 2, **dadurch gekennzeichnet, dass** die Scheiben (34) in einer sich überlagernden Schneideposition und mit einem abwechselnden Höhenversatz angeordnet sind.

4. Schneidewerk (30) nach einem der vorhergehenden Ansprüche, **dadurch gekennzeichnet, dass** die Motorisierung (36) hinter den Wellen der Scheiben (34) angeordnet ist.

5. Schneidewerk (30) nach einem der vorhergehenden Ansprüche, **dadurch gekennzeichnet, dass** das Gehäuse (32) einen einstückigen Unterbau (40) in der Gestalt einer starren Grundplatte aufweist, auf der ein Hauptgehäuse (42) mit einer gekrümmten Vorderseite (44) angebracht ist, das in Bezug auf die Vorwärts- und Arbeitsrichtung F unmittelbar vor den Drehwellen der Scheiben (34) angeordnet ist.

6. Schneidewerk (30) nach Anspruch 5, **dadurch gekennzeichnet, dass** der Unterbau (40) einen Träger (46) für die Befestigung im hinteren Bereich aufweist.

7. Schneidewerk (30) nach einem der vorhergehenden Ansprüche, **dadurch gekennzeichnet, dass** die Antriebsmittel (38) eine Antriebsscheibe (50M) und Abtriebsscheiben (50-1 bis 50-4) aufweisen, die jeweils mit der Welle der entsprechenden Schneidscheibe (34) verbunden sind, sowie Riemen (52-1 bis 52-3) aufweisen, die die Übertragung zwischen der Motorisierung (36) und den Wellen der Scheiben (34) gewährleisten, sowie eine Spannrolle (54) aufweisen.

8. Schneidewerk (30) nach einem der Ansprüche 5 oder 6, **dadurch gekennzeichnet, dass** der Unterbau (40) im unteren Bereich als gekrümmte Verlängerung des Gehäuses einen Schuh (56) aufnimmt, der aus dem Arbeitsbereich der unteren Scheibe (34-4) herausragt.

9. Schneidewerk (30) nach Anspruch 8, **dadurch gekennzeichnet, dass** der Schuh (56) als gekrümmte Verlängerung des Gehäuses mit der Grundplatte des Unterbaus (40) und mit dem Träger (46) verbunden ist.

10. Schneidewerk (30) nach einem der Ansprüche 5, 6, 8 oder 9, **dadurch gekennzeichnet, dass** der Unterbau (40) ein hinteres Abweisteil (62) aufweist.

11. Schneidewerk (30) nach Anspruch 10, **dadurch gekennzeichnet, dass** das Abweisteil (62) mehrteilig ist.

## Claims

1. A trimmer (30) for pruning plants, such as trees or hedges, comprising a chamber (32) able to receive cutting discs (34), a motor (36) and means (38) for rotating said cutting discs (34), **characterised in that** the chamber (32) is curvilinear, the centre being on the rear of said chamber so as to have a convex leading edge BA in the travel and work direction F.

2. A trimmer (30) according to claim 1, **characterised in that** the chamber (32) carries cutting discs (34), the rotation shafts of which are arranged in a curved line.

3. A trimmer (30) according to claim 1 or 2, **characterised in that** the discs (34) are arranged with superimposition of cutting and an alternating offset in height.

4. A trimmer (30) according to any of the preceding claims, **characterised in that** the motor (36) is positioned at the rear of the shafts of the discs (34).

5. A trimmer (30) according to any of the preceding claims, **characterised in that** the chamber (32) comprises a single-piece frame (40) in the form of a rigid bottom plate to which a main casing (42) with its curvilinear front face (44) is attached, positioned immediately upstream of the rotation shafts of the discs (34) with respect to the travel and work direction F.

6. A trimmer (30) according to claim 5, **characterised in that** the frame (40) comprises a fixing beam (46) on the rear part thereof.

7. A trimmer (30) according to any of the preceding claims, **characterised in that** the drive means (38) comprises a driving pulley (50M) and driven pulleys (50-1 to 50-4), each connected to each corresponding shaft of a cutting disc (34), as well as belts (52-1 to 52-3) providing the transmission between said motor (36) and the shafts of the discs (34) as well as a tensioning roller (54).

8. A trimmer (30) according to either claim 5 or 6, **characterised in that** the frame (40) receives, at the bottom part, a shoe (56) projecting beyond the working zone of the bottom disc (34-4), in a curvilinear extension of the chamber.

9. A trimmer (30) according to claim 8, **characterised in that** the shoe (56) is connected to the bottom plate of the frame (40) and to the beam (46).

10. A trimmer (30) according to any of claims 5, 6, 8 or 9, **characterised in that** the frame (40) comprises a rear guard (62) .

11. A trimmer (30) according to claim 10, **characterised in that** the guard (62) is multisector.
